# EUROPÄISCHE PATENTSCHRIFT

(11) **EP 4 480 297 B1**
(45) Veröffentlichungstag und Bekanntmachung des Hinweises auf die Patenterteilung: **10.06.2026**
(21) Anmeldenummer: 24168654.2
(22) Anmeldetag: 05.04.2024
(51) Int. Cl.: A01D 41/127, A01D 43/08, G01N 21/85

(54) **KAMERASYSTEM FÜR EINEN SELBSTFAHRENDEN FELDHÄCKSLER**
CAMERA SYSTEM FOR A SELF-PROPELLED FORAGE HARVESTER
SYSTÈME DE CAMÉRA POUR UNE RAMASSEUSE-HACHEUSE AUTOMOTRICE

(30) Priorität: 22.06.2023 DE 102023116408
(43) Veröffentlichungstag der Anmeldung: 25.12.2024
(73) Patentinhaber: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Klein-Helmkamp, Marwin, 49565 Bramsche (DE)
(74) Vertreter: CLAAS Gruppe

(56) Entgegenhaltungen:
- DE-A1- 102014 011 308
- DE-A1- 102020 122 208
- US-A1- 2021 400 871
- US-A1- 2023 042 046

## Beschreibung

Die vorliegende Erfindung betrifft ein Kamerasystem für einen selbstfahrenden Feldhäcksler gemäß dem Oberbegriff des Anspruches 1. Weiterhin ist ein selbstfahrender Feldhäcksler gemäß dem Oberbegriff des Anspruches 15 Gegenstand der vorliegenden Erfindung.

Aus der DE 10 2020 122 202 A1 ist ein Kamerasystem für einen Feldhäcksler gemäß dem Oberbegriff des Anspruches 1 bekannt. Das dort beschriebene Kamerasystem umfasst als Optionen für zumindest eine zum Einsatz kommende Kamera eine sichtbares Licht und infrarotes Licht aufnehmende Multispektralkamera oder eine Hyperspektralkamera oder eine RGB-Kamera in Kombination mit einer IR-Kamera, die jeweils Bilddaten zur Auswertung an eine Bildanalyseeinrichtung übertragen. Mittels eines Bilderkennungsalgorithmus werden Kornbestandteile sowie Nicht-Kornbestandteile im Erntegutstrom detektiert. Wesentlich ist gemäß der DE 10 2020 122 202 A1 dabei, dass das Kamerasystem zusätzlich Bilddaten im Infrarotbereich bereitstellen muss, um zwischen Kornbestandteilen und Nicht-Kornbestandteile unterscheiden zu können.

Ausgehend vom vorstehend genannten Stand der Technik liegt der Erfindung die Aufgabe zugrunde, ein Kamerasystem der eingangs genannten Art weiterzubilden, welches sich durch einen kostengünstigeren Aufbau auszeichnet, wobei die Qualität der Genauigkeit der Erkennung von Kornbestandteilen sowie Nicht-Kornbestandteilen im Erntegutstrom durch eine Bildanalyseeinrichtung zumindest vergleichbar ist.

Diese Aufgabe wird erfindungsgemäß durch ein Kamerasystem mit den Merkmalen des Anspruches 1 gelöst. Vorteilhafte Weiterbildungen sind Gegenstand der hiervon abhängigen Ansprüche.

Gemäß Anspruch 1 wird ein Kamerasystem für einen selbstfahrenden Feldhäcksler vorgeschlagen, wobei das Kamerasystem dazu ausgeführt und eingerichtet ist, einen von Arbeitsaggregaten des Feldhäckslers bearbeiteten Erntegutstrom, der ganze Körner und zerkleinerte Körner als Kornbestandteile sowie Nicht-Kornbestandteile umfasst, zu erfassen und auszuwerten. Das Kamerasystem umfasst eine RGB-Kamera, die zur Erfassung des einen Auswurfkrümmer des Feldhäckslers durchströmenden Erntegutstroms eingerichtet ist, wobei die RGB-Kamera in einem an dem Auswurfkrümmer angeordneten Gehäuse angeordnet ist, in welchem eine lichtdurchlässige Sichtscheibe angeordnet ist, an welcher der zu detektierende Erntegutstrom vorbeiströmt, sowie eine der Sichtscheibe gegenüberliegend angeordnete Lichtquelle, deren Lichtstrahlen auf den Erntegutstrom gerichtet sind, zumindest ein Spiegel, welcher von dem Erntegutstrom reflektiertes Licht in ein an der RGB-Kamera angeordnetes Objektiv umlenkt, und eine Bildanalyseeinrichtung, an welche die RGB-Kamera vom Erntegutstrom aufgenommene Bilder zur Auswertung überträgt. Erfindungsgemäß ist vorgesehen, dass die RGB-Kamera Bilder des Erntegutstroms mit einer Bildrate im Bereich von 20 Bildern/Sekunde bis 40 Bildern/Sekunde aufnimmt, dass die Belichtungszeit zwischen 5 Mikrosekunden und 25 Mikrosekunden liegt und dass das Objektiv der RGB-Kamera eine Brennweite zwischen 7 mm und 10 mm aufweist.

Besonders bevorzugt kann die RGB-Kamera Bilder des Erntegutstroms insbesondere mit einer Bildrate im Bereich von 25 Bildern/Sekunde bis 35 Bildern/Sekunde aufnehmen.

Weiter bevorzugt kann die Belichtungszeit insbesondere zwischen 9 Mikrosekunden und 21 Mikrosekunden liegen.

Wesentlich ist die Überlegung, die Ausführung der RGB-Kamera des Kamerasystems sowie die für das Aufnehmen von Bildern durch die RGB-Kamera wesentlichen Parameter an die im Auswurfkrümmer herrschenden Bedingungen, insbesondere die Strömungsgeschwindigkeit des Erntegutstroms nach dem Austritt aus einer Nachzerkleinerungsvorrichtung, welche im Bereich von 15 m/s bis 20 m/s liegt, optimal anzupassen. Mit der erfindungsgemäßen Ausführung und vorschlagsgemäßen Parametrisierung der RGB-Kamera lässt sich ein Bildanalyseverfahren zur computerimplementierten Bestimmung des Kornaufschlussgrades von Körnern innerhalb des von Arbeitsaggregaten des Feldhäckslers bearbeiteten Erntegutstroms mittels der Bildanalyseeinrichtung des Kamerasystems durchführen, welches mit der hierfür erforderlichen Genauigkeit die Unterscheidung von Kornbestandteilen und Nichtkornbestandteilen und darauf basierend die Differenzierung zwischen ganzen Körnern und zerkleinerten Körnern durch optisches Sieben ermöglicht. Die erforderliche Genauigkeit der Unterscheidung von Kornbestandteilen und Nichtkornbestandteilen sowie die Differenzierung zwischen ganzen Körnern und zerkleinerten Körnern durch das Bildanalyseverfahren basiert auf einem vorgegebenen Bestimmtheitsmaß.

Bevorzugt kann das Objektiv einen Bildwinkel im Bereich von 32° bis 37° aufweisen. Besonders bevorzugt kann das Objektiv einen Bildwinkel im Bereich von 34° bis 35° aufweisen. Die daraus resultierende Auswahl für das Objektiv der RGB-Kamera dient dazu, die im Straßenverkehr zulässige Gesamthöhe des Feldhäckslers von bis zu 4 m einzuhalten.

Weiter bevorzugt kann die rund, oval oder polygonal ausgeführte Sichtscheibe einen durch das Objektiv erfassbaren sichtbaren Durchmesser aufweisen, der größer als 7 cm und kleiner als 13 cm ist. Besonders bevorzugt kann die Sichtscheibe einen Durchmesser aufweisen, der größer oder gleich 9 cm und kleiner oder gleich 12 cm ist. Der vorschlagsgemäße Bereich für den Durchmesser der Sichtscheibe ist relevant hinsichtlich der Anforderung an die Bildrate, um die Genauigkeitsanforderung für die Auswertung durch die Bildanalyseeinrichtung zu gewährleisten. Mit zunehmendem Durchmesser ließe sich die Bildrate zwar reduzieren, dabei führt die Vergrößerung der Fläche der Sichtscheibe zu zunehmenden Anforderungen an die Belastbarkeit der Sichtscheibe. Aufgrund der Anordnung der Sichtscheibe im Auswurfkrümmer des Feldhäckslers ist diese dauerhaft dem Gutstrom ausgesetzt und erfährt Belastungen durch den vom Erntegutstrom ausgeübten Anpressdruck.

Insbesondere kann sich durch den zumindest einen Spiegel eine Gegenstandsweite im Bereich von 175 mm bis 195 mm ergeben. Besonders bevorzugt kann die Gegenstandsweite im Bereich von 180 mm bis 190 mm liegen. Die Gegenstandsweite hat einen signifikanten Einfluss auf die Abmessungen des Gehäuses. Die Abmessungen des Gehäuses unterliegen dabei wegen der Anordnung auf dem Auswurfkrümmer der weiter oben bereits genannten Höhenrestriktion hinsichtlich der Gesamthöhe des Feldhäckslers bei der Straßenfahrt. Insbesondere sind die Abmessungen des Spiegels derart gewählt, dass der Bildwinkel des Objektivs berücksichtigt wird und das gesamte Sichtfenster visualisiert werden kann.

Gemäß einer bevorzugten Ausführung kann die Sichtscheibe aus Saphirglas bestehen. Saphirglas ist hinsichtlich seiner Festigkeit, Verschleißbeständigkeit und hohen Lichtdurchlässigkeit besonders für den Einsatz im Auswurfkrümmer geeignet.

Insbesondere kann das Gehäuse auf der Oberseite des Auswurfkrümmers angeordnet sein, wobei das Gehäuse bezogen auf die Längserstreckung des Auswurfkrümmers in dessen zweiten Hälfte angeordnet sein kann. Diese Position des Gehäuses stellt sicher, dass die Querverteilung des Häckselgutes die gesamte Breite des Auswurfkrümmers abdeckt. Eine Position in der Nähe der Nachbearbeitungsvorrichtung würde zwar zu weniger strickten Rahmenbedingungen bezüglich der Bauhöhe des Gehäuses des Kamerasystems führen, da in angehobener Stellung im Erntebetrieb der untere Teil des Auswurfkrümmers jedoch etwa orthogonal zur Fahrtrichtung ist, wird die Innenseite des Auswurfkrümmers zunächst nur teilweise mit Häckselgut bedeckt. Eine Position im hinteren Segment des Auswurfkrümmers führt also zu einer maximalen Querverteilung und geringeren Gutgeschwindigkeiten des Häckselgutes.

Insbesondere kann das Kamerasystem eine Steuereinheit zur Ansteuerung der Lichtquelle aufweisen. Als Lichtquelle wird bevorzugt zumindest ein Matrix-LED-Scheinwerfer verwendet.

Dabei kann die Steuereinheit zur Ansteuerung der zumindest einen Lichtquelle im Gehäuse angeordnet sein.

Es kann vorteilhaft sein, wenn die zumindest eine Lichtquelle im Gehäuse angeordnet ist. Eine gemeinsame Anordnung der Komponenten des Kamerasystems, der RGB-Kamera, des Objektivs, des zumindest einen Spiegels sowie der zumindest einen Lichtquelle, in dem Gehäuse ermöglicht eine besonders kompakte Bauweise.

Bevorzugt kann die Position der Lichtquelle im Gehäuse gegenüber der Sichtscheibe und dem Spiegel in vertikaler Richtung und/oder in horizontaler Richtung veränderbar sein. Die Verstellbarkeit der Position der Lichtquelle ermöglicht eine Feinjustierung und Kalibrierung des Kamerasystems.

Gemäß einer Weiterbildung kann die Position der RGB-Kamera in vertikaler Richtung und/oder in horizontaler Richtung verstellbar sein.

Insbesondere kann die in den Auswurfkrümmer hineinragende Sichtscheibe auf der Innenseite des Auswurfkrümmers mit dessen Oberfläche im Wesentlichen bündig abschließend angeordnet sein. So kann die Sichtscheibe in eine im Wesentlichen ringförmige Halterung eingeklebt sein, sodass sie bündig mit der innenseitigen Oberfläche des Auswurfkrümmers abschließt, wodurch Beeinflussungen des Gutstroms minimiert werden. Die ringförmige Halterung kann eine runde, ovale oder polygonale Kontur aufweisen. Bei einer in eine ringförmige Halterung geklebten Anordnung der Sichtscheibe findet die dafür notwendige randseitige Auflagefläche beim durch das Objektiv erfassbaren sichtbaren Durchmesser der Sichtscheibe Berücksichtigung, welcher bei der Aufnahme des Erntegutstroms wirksam ist.

Bevorzugt kann die Stärke der Sichtscheibe im Bereich zwischen 2 mm und 4 mm liegen.

Gemäß einer Weiterbildung kann der Abstand der Lichtquelle zum Mittelpunkt der Sichtscheibe zwischen 120 mm und 130 mm betragen und die Lichtquelle kann unter einem Winkel zwischen 31° und 34° zur Oberfläche der Sichtscheibe geneigt angeordnet sein. Hierdurch kann eine indirekte Beleuchtung zur Unterbindung von Reflektionen entstehen.

Die eingangs gestellte Aufgabe wird weiterhin durch einen selbstfahrenden Feldhäcksler mit den Merkmalen des Anspruchs 15 gelöst.

Gemäß dem Anspruch 15 wird ein selbstfahrender Feldhäcksler vorgeschlagen, umfassend ein Vorsatzgerät als Arbeitsaggregat zur Aufnahme von Erntegut, Arbeitsaggregate zur Bearbeitung eines aus dem aufgenommen Erntegut erzeugten Erntegutstromes, ein Fahrerassistenzsystem, welches zur Ansteuerung der Arbeitsaggregate ausgeführt und eingerichtet ist, sowie eine Bildanalyseeinrichtung, wobei die Bildanalyseeinrichtung ein Kamerasystem umfasst, welches zyklisch Bilder des Erntegutstroms aufnimmt und an die Bildanalyseeinrichtung zur Bildanalyse unter Verwendung eines Bildanalyseverfahrens überträgt, um den Kornaufschlussgrad von Körnern im Erntegutstrom zu bestimmen, wobei das Kamerasystem nach einem der Ansprüche 1 bis 14 ausgeführt ist.

Auf alle Ausführungen zu dem erfindungsgemäßen Kamerasystem darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch einen Feldhäcksler;
- Fig. 2: schematisch und exemplarisch eine perspektivische Teilansicht eines Auswurfkrümmers des Feldhäckslers mit darauf angeordnetem Kamerasystem; und
- Fig. 3: schematisch und exemplarisch eine vereinfachte Darstellung des Kamerasystems.

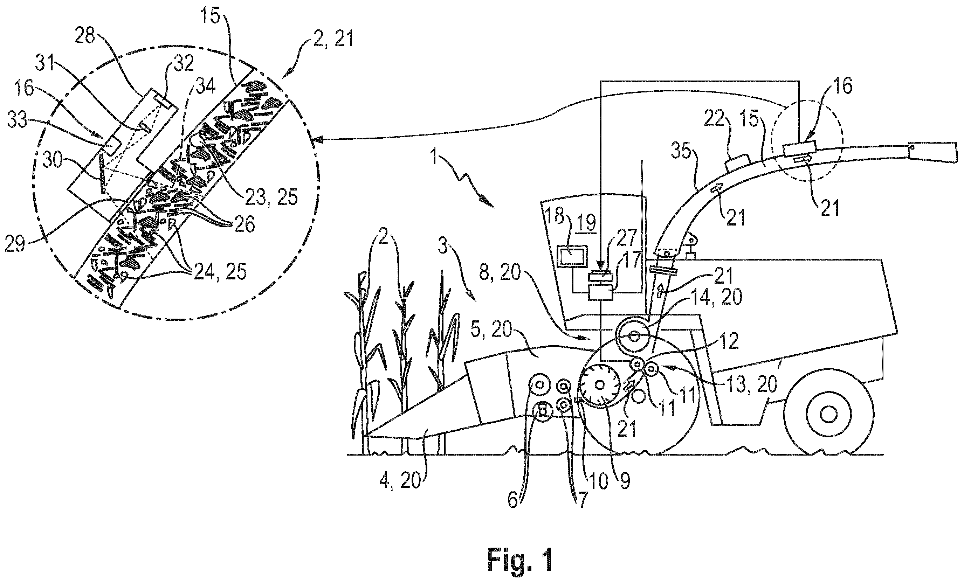

Fig. 1 zeigt schematisch und exemplarisch einen erfindungsgemäßen Feldhäcksler 1 beim Abernten eines Bestandes von Pflanzen, insbesondere Maispflanzen 2, auf einem Feld. Eine Aufnahmevorrichtung 3 des Feldhäckslers 1 umfasst in an sich bekannter Weise ein in Anpassung an das zu erntende Pflanzenmaterial austauschbares Vorsatzgerät 4 und eine Einzugseinrichtung 5 mit mehreren Walzenpaaren 6, 7, die das Erntegut von dem Vorsatzgerät 4 übernimmt, um es einer Häckselvorrichtung 8 zuzuführen.

Die Häckselvorrichtung 8 umfasst eine drehangetriebene Häckseltrommel 9, eine Gegenschneide 10, über welche die Maispflanzen 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Der Häckselvorrichtung 8 ist eine Nachzerkleinerungsvorrichtung 13, auch als Corn-Cracker bezeichnet, mit einem Paar von Konditionier- oder Crackerwalzen 11, die einen Spalt 12 von verstellbarer Breite, im Folgenden auch als Crackerspalt bezeichnet, begrenzen und mit unterschiedlichen Geschwindigkeiten rotieren, um in dem durch den Spalt 12 hindurchtretenden Materialstrom enthaltene Maiskörner zu zerkleinern, nachgeordnet. Ein Nachbeschleuniger 14 verleiht dem zerkleinerten und in der Nachzerkleinerungsvorrichtung 13 konditionierten Erntegut, hier den Maispflanzen 2, die notwendige Geschwindigkeit, um einen Auswurfkrümmer 15 zu durchlaufen und in ein (nicht dargestelltes) Begleitfahrzeug übergeladen zu werden. Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche einen durch den Auswurfkrümmer 15 hindurch geförderten Erntegutstrom 21 (durch Pfeile veranschaulicht) seitlich begrenzen und führen.

An dem Auswurfkrümmer 15 ist zumindest ein Kamerasystem 16 angeordnet, um Bilder des durch den Auswurfkrümmer 15 hindurch geförderten Erntegutstroms 21 zu erzeugen. Weiterhin kann auf dem Auswurfkrümmer 15 ein NIR-Sensor 22 angeordnet sein. Mittels des NIR-Sensors 22 lassen sich Ernteguteigenschaften bestimmen. Der NIR-Sensor 22 ist hier und bevorzugt dem Kamerasystem 16 vorgeordnet auf der Oberseite des Auswurfkrümmers 16 positioniert.

Das Vorsatzgerät 4, die Einzugsvorrichtung 5, die Häckselvorrichtung 8, die Nachzerkleinerungsvorrichtung 13 sowie der Nachbeschleuniger 14 und deren jeweilige Komponenten sind Arbeitsaggregate 20 des Feldhäckslers 1, die dem Abernten der Maispflanzen 2 eines Feldbestandes und/oder der Bearbeitung der Maispflanzen 2 des Feldbestandes im Rahmen des Ernteprozesses dienen.

Innerhalb des von den Arbeitsaggregaten 20 des Feldhäckslers 1 bearbeiteten Erntegutstroms 21 befinden sich ganze Körner 23 und zerkleinerte Körner 24 als Kornbestandteile 25 sowie Nicht-Kornbestandteile 26, wie Stängel, Blätter und dergleichen.

Das Kamerasystem 16 weist eine RGB-Kamera 32 zur Aufnahme von Bilddaten des im Erntegutstrom 21 enthaltenen Ernteguts auf. Die RGB-Kamera 32 nimmt ortsaufgelöst Bilddaten auf. Der Begriff "ortsaufgelöst" bedeutet hier, dass es in den Bilddaten möglich ist, Einzelheiten des Ernteguts zu unterscheiden. Die RGB-Kamera 32 weist also zumindest genügend Pixel auf, um die vorschlagsgemäße, noch zu erläuternde Bildanalyse zu ermöglichen. Das Kamerasystem 16 erfasst in einer Messroutine mittels der RGB-Kamera 32 Bilddaten des Ernteguts im Erntegutstrom 21, hier der zerkleinerten Maispflanzen 2. Diese Messroutine wird entsprechend während des Betriebs des Feldhäckslers 1 durchgeführt.

Die von dem Kamerasystem 16 generierten Bilder werden an eine Bildanalyseeinrichtung 27 übertragen und von dieser ausgewertet.

Die Bildanalyseeinrichtung 27 ist mit einem Fahrerassistenzsystems 17 verbunden oder kann als Bestandteil des Fahrerassistenzsystems 17 ausgeführt sein. Das Fahrerassistenzsystem 17 kann mit einer Eingabe-Ausgabe-Einheit 18 in einer Fahrerkabine 19 des Feldhäckslers 1 verbunden sein, um Auswertungsergebnisse darauf auszugeben. Das Fahrerassistenzsystem 17 steuert zumindest ein Stellglied zum Einstellen der Spaltweite des Crackerspalts 12 und/oder der Differenzdrehzahl und/oder der Drehzahlniveaus der Walzen 11 der Nachzerkleinerungsvorrichtung 13 an.

Die Walzen 11 der Nachzerkleinerungsvorrichtung 13 rotieren im Betrieb mit jeweils einer als Parameter einstellbaren Drehzahl, wobei zwischen den Walzen der Spalt 12 mit einer als Parameter einstellbaren Spaltbreite verbleibt. Des Weiteren weisen die Walzen 11 eine als Parameter einstellbare Drehzahldifferenz auf, um die sich die Drehzahlen der Walzen 11 unterscheiden. Zumindest einen der Parameter steuert das Fahrerassistenzsystem 17 in Abhängigkeit von einem zu bestimmenden Kornaufschlussgrad an.

Hintergrund der Ansteuerung der Nachzerkleinerungsvorrichtung 13 in Abhängigkeit vom Kornaufschlussgrad ist, dass es besonders bei der Verwendung des Ernteguts als Futtermittel für Tiere und bei der Verwendung in Biogasanlagen wichtig ist, dass die Kornbestandteile 25 des Ernteguts aufgeschlossen, also zerkleinert, werden. Wichtig ist das Aufschließen der Kornbestandteile 25, damit die darin enthaltene Stärke zugänglich wird und nicht durch die Hülle des Kornbestandteils 25 geschützt wird. Das Aufschließen der Kornbestandteile 25 geschieht einerseits durch das Häckseln des Ernteguts und andererseits wesentlich durch die Nachzerkleinerungsvorrichtung 13. Die Nachzerkleinerungsvorrichtung 13 kann zwar so eingestellt werden, dass mit Sicherheit alle im Erntegutstrom 21 enthaltenen Kornbestandteile 25 zerkleinert sind, was mit einem erhöhten Verbrauch an Energie bzw. Kraftstoff einhergeht. So könnte, um eine maximale Zerkleinerung und somit eine hohe Aufbereitungsqualität der Kornbestandteile 25 zu erreichen, die Spaltbreite minimal eingestellt werden. Diese unnötig hohe verbrauchte Energie kann damit nicht in eine Steigerung der Fahrgeschwindigkeit umgesetzt werden, so dass sich systemimmanent eine entsprechend geminderte Flächenleistung ergibt.

Nachstehend wird das vorschlagsgemäße Verfahren zur computerimplementierten Bestimmung des Kornaufschlussgrades der Körner 23 erläutert. Hierzu werden mittels der optischen Erfassungseinrichtung 16 zyklisch aufgenommene Bilder 28 des Erntegutstroms 21 an die Bildanalyseeinrichtung 27 zur Auswertung mittels eines Bildanalyseverfahrens übertragen.

Das schematisch dargestellte Kamerasystem 16 weist neben der RGB-Kamera 32 eine Optik auf. Die Optik umfasst einen Spiegel 30, ein an der RGB-Kamera 32 angeordnetes Objektiv 31 und zumindest eine Lichtquelle 33. Die RGB-Kamera 32 weist ein Sichtfeld 34 auf, in dem sie vom Erntegutstrom 21 reflektiertes Licht detektieren kann. Die RGB-Kamera 32 und die Optik sind in einem Gehäuse 28 des Kamerasystems 16 angeordnet, welches auf der Oberseite des Auswurfkrümmers 15 befestigt ist. Auf der dem Auswurfkrümmer 15 zugewandten Seite des Gehäuses 28 ist eine lichtdurchlässige Sichtscheibe 29 angeordnet. Die Sichtscheibe 29 besteht hier und vorzugsweise aus Saphirglas. Die Sichtscheibe 29 kann rund, oval oder polygonal ausgeführt sein.

Das auf der Oberseite des Auswurfkrümmers 15 angeordnete Gehäuse 28 des Kamerasystems 16 ist, bezogen auf die Längserstreckung des Auswurfkrümmers 15, in dessen zweiter Hälfte angeordnet.

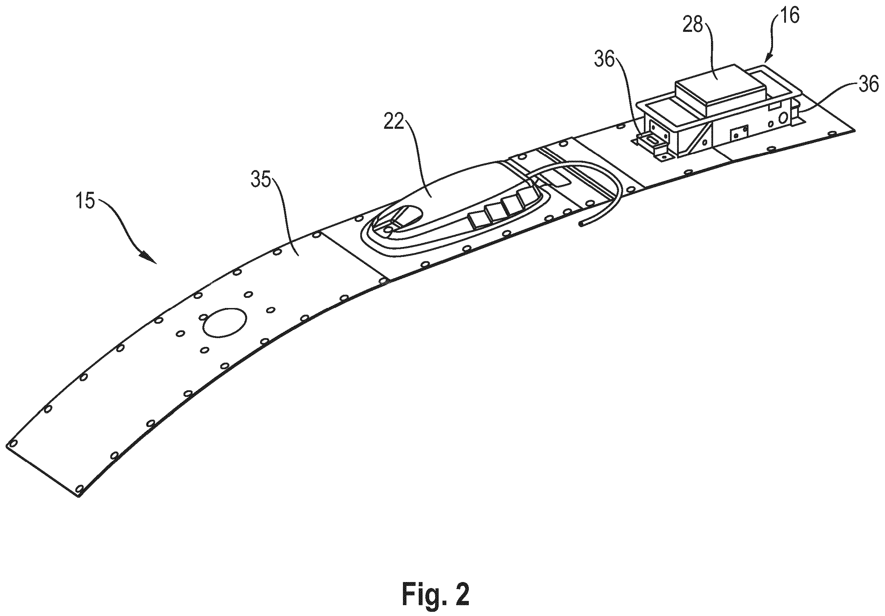

Fig. 2 zeigt schematisch und exemplarisch eine perspektivische Teilansicht der Oberseite 35 des Auswurfkrümmers 15 mit dem darauf angeordneten NIR-Sensor 22 sowie dem diesem nachgeordneten Kamerasystem 16. Das Gehäuse 28 ist mittels zweier Montagevorrichtungen 36 auf der Oberseite 35 des Auswurfkrümmers 15 lösbar befestigt.

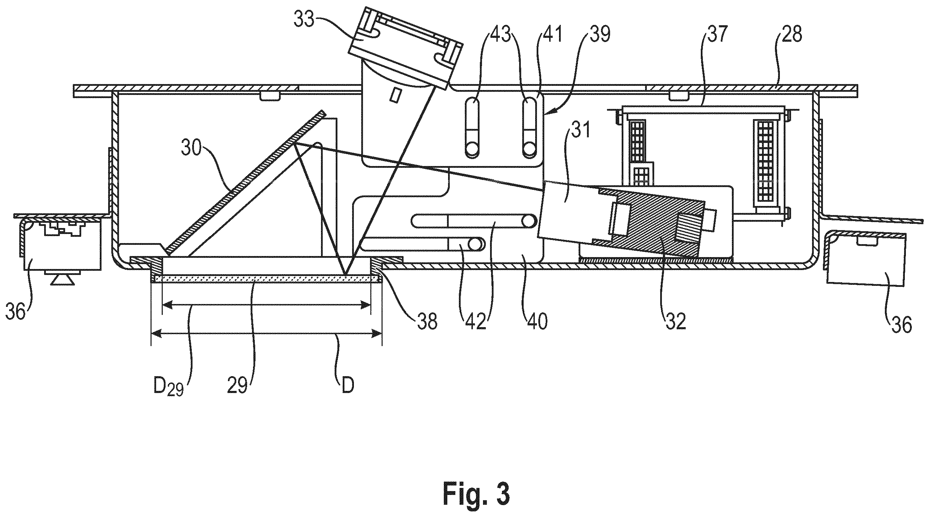

Fig. 3 zeigt schematisch und exemplarisch eine vereinfachte Darstellung des Kamerasystems 16. In der Oberseite 35 des Auswurfkrümmers 15 ist eine Öffnung vorgesehen, in welche die Sichtscheibe 29 bündig mit der dem Erntegutstrom 21 zugewandten Oberfläche der Oberseite 35 abschließend eingelassen ist. Hier und vorzugsweise sind die Sichtscheibe 29 und die Öffnung im Wesentlichen kreisförmig ausgeführt. Alternativ können die Sichtscheibe 29 und die Öffnung polygonal ausgeführt sein. Die Sichtscheibe 29 kann in eine im Wesentlichen ringförmige Halterung 38 eingeklebt sein. Die Halterung 38 ist im Gehäuse 28 befestigt. Die Halterung 38 kann lösbar am Gehäuse 28 befestigt sein.

Die Sichtscheibe 29 weist einen durch das Objektiv 31 erfassbaren sichtbaren Durchmesser D₂₉ auf, der größer als 7 cm und kleiner als 13 cm ist. Besonders bevorzugt kann die Sichtscheibe 29 einen erfassbaren sichtbaren Durchmesser D₂₉ aufweisen, der größer oder gleich 9 cm und kleiner oder gleich 12 cm ist. Mit D ist ein Gesamtdurchmesser der im dargestellten Ausführungsbespiel rund ausgeführten Sichtscheibe 29 bezeichnet, der einen Randbereich zwischen 2 mm und 4 mm enthält, welcher der Auflage auf der Halterung 38 dient.

Bei einer polygonalen Ausführung der Sichtscheibe 29, einer zumindest viereckigen Ausführung, wird der durch das Objektiv 31 erfassbare sichtbare Durchmesser D₂₉ durch die jeweilige die Kantenlänge berücksichtigt.

Bei der in die Halterung 38 geklebten Anordnung der Sichtscheibe 29 findet die dafür notwendige randseitige Auflagefläche beim durch das Objektiv 31 erfassbaren sichtbaren Durchmesser D₂₉ der Sichtscheibe 29 Berücksichtigung, welcher bei der Aufnahme des Erntegutstroms wirksam ist. Der durch das Objektiv 31 erfassbare sichtbare Durchmesser D₂₉ der Sichtscheibe 29 begrenzt das Sichtfeld 34.

Bevorzugt kann die Stärke der Sichtscheibe 29 im Bereich zwischen 2 mm und 4 mm liegen. Die Stärke der Sichtscheibe 29 hängt dabei im Wesentlichen vom Gesamtdurchmesser D respektive den Kantenlängen bei einer polygonalen Ausführung der Sichtscheibe 29 ab.

Die RGB-Kamera 32 nimmt Bilder des Erntegutstroms 21 mit einer Bildrate im Bereich von 20 Bildern/Sekunde bis 40 Bildern/Sekunde auf. Besonders bevorzugt liegt die Bildrate im Bereich von 25 Bildern/Sekunde bis 35 Bildern/Sekunde. Die Belichtungszeit liegt hier und vorzugsweise zwischen 5 Mikrosekunden und 25 Mikrosekunden. Besonders bevorzugt liegt die Belichtungszeit im Bereich zwischen 9 Mikrosekunden und 20 Mikrosekunden Das Objektiv 31 der RGB-Kamera 32 weist eine Brennweite zwischen 7 mm und 10 mm auf. Weiterhin weist das Objektiv 31 hier und vorzugsweise einen Bildwinkel im Bereich von 32° bis 37° auf. Besonders bevorzugt kann das Objektiv 31 einen Bildwinkel im Bereich von 34° bis 35° aufweisen.

Durch den zumindest einen Spiegel 30 im Gehäuse 28 ergibt sich eine Gegenstandsweite im Bereich von 175 mm bis 195 mm. Insbesondere sind die Abmessungen des Spiegels 30 derart gewählt, dass der Bildwinkel des Objektivs 31 berücksichtigt wird und das gesamte Sichtfenster der Sichtscheibe 29, welches dem lichtdurchlässigen Durchmesser D₂₉ entspricht, visualisiert werden kann. Die Realisierung der Gegenstandsweite im Bereich von 175 mm bis 195 mm wird mittels des zumindest einen Spiegels 30 realisiert, sodass eine Überschreitung der maximal zulässigen Höhe aufgrund der Bauhöhe des Gehäuses auf dem Auswurfkrümmer 15 im Straßenverkehr vermieden wird. Durch die Wahl der Brennweite zwischen 7 mm und 10 mm bei einer Gegenstandsweite im Bereich von 175 mm bis 195 mm können unerwünschte Artefakte wie Bildkrümmungen vermieden werden, die bei kürzeren Brennweiten und zugleich niedrigeren Gegenstandsweiten zu erwarten sind. Besonders bevorzugt kann die Gegenstandsweite im Bereich von 180 mm bis 190 mm liegen.

Das Kamerasystem kann eine Steuereinheit 37 zur Ansteuerung der zumindest einen Lichtquelle 33 aufweisen. Die Steuereinheit 37 zur Ansteuerung der zumindest einen Lichtquelle 33 kann bevorzugt im Gehäuse 28 angeordnet sein. Als Lichtquelle 33 wird bevorzugt zumindest ein Matrix-LED-Scheinwerfer verwendet.

Die Position der zumindest einen Lichtquelle 33 im Gehäuse 28 kann gegenüber der Sichtscheibe 29 und dem Spiegel 30 in vertikaler Richtung und/oder in horizontaler Richtung verstellbar sein. Hierzu kann die Lichtquelle 33 mittels einer Haltevorrichtung 39 im Gehäuse 28 angeordnet sein, die gegenüber dem Gehäuse 28 relativbewegliche Komponenten aufweist. Hierdurch wird eine Kalibrierung und Feinjustierung ermöglicht.

Im dargestellten Ausführungsbeispiel umfasst die Haltevorrichtung 39 im Wesentlichen L-förmige Bleche 40, 41 als relativbewegliche Komponenten, die paarweise angeordnet sind. Jeweils ein Paar der im Wesentlichen L-förmigen Halteelemente 40, 41 ist auf einer Seite der Lichtquelle 33 angeordnet. Die sich abschnittsweise in Längsrichtung des Gehäuses 28 erstreckenden Halteelemente 40 weisen waagerecht verlaufende, parallel zueinander angeordnete Langlöcher 42 auf, innerhalb der die Halteelemente 40 gegenüber dem Gehäuse 28 verschiebbar sind. Die Halteelemente 41 weisen vertikal verlaufende, parallel zueinander angeordnete Langlöcher 43 auf, innerhalb derer die Halteelemente 41 gegenüber den Halteelementen 40 respektive dem Gehäuse 28 verschiebbar sind.

Der Abstand der zumindest einen Lichtquelle 33 zum Mittelpunkt der Sichtscheibe 29 beträgt hier und vorzugsweise zwischen 120 mm und 130 mm. Die zumindest einen Lichtquelle 33 ist hier und vorzugsweise unter einem Winkel zwischen 31° und 34° zur Oberfläche der Sichtscheibe 29 geneigt angeordnet.

Zusätzlich kann auch die RGB-Kamera 32 mit dem daran angeordneten Objektiv 31 in vertikaler Richtung und/oder in horizontaler Richtung und/oder ihrer Neigung verstellbar sein.

Die von der RGB-Kamera 32 bereitgestellten Bilder werden an die Bildanalyseeinrichtung 27 zur Auswertung übertragen. Mittels der Bildanalyseeinrichtung 27 wird ein Bildanalyseverfahren zur computerimplementierten Bestimmung des Kornaufschlussgrades von Körnern innerhalb des von den Arbeitsaggregaten 20, insbesondere der Nachzerkleinerungsvorrichtung 13 des Feldhäckslers 1 bearbeiteten Erntegutstroms 21 durchgeführt. Dabei wird zumindest ein Arbeitsaggregat 20, hier und vorzugsweise die Nachzerkleinerungsvorrichtung 13, in Abhängigkeit vom Kornaufschlussgrad angesteuert. Das Bildanalyseverfahren ist dadurch gekennzeichnet, dass
- in einer ersten Stufe mittels digitaler Bildverarbeitung in den Bildern enthaltene Bildpixel in Kornbestandteile 25 und Nicht-Kornbestandteile 26 klassifiziert werden, und dass
- in einer zweiten Stufe des Bildanalyseverfahrens eine Längenbestimmen einer langen Hauptachse und einer kurzen Hauptachse jedes klassifizierten Kornbestandteils 25 mittels eines Längen-Breiten-Vergleichs durchgeführt wird,
wobei die Durchführung der ersten Stufe und der zweiten Stufe des Bildanalyseverfahrens durch zumindest ein neuronales Netzwerk durchgeführt wird.

Das zumindest eine neuronale Netzwerk kann Bestandteil der Bildanalyseeinrichtung 27 oder des Fahrerassistenzsystems 17 sein. Insbesondere kann das neuronale Netzwerk in Form einer U-Net Architektur eines gefalteten neuronalen Netzwerks (Convolutional Neural Network) oder als rückgekoppeltes neuronales Netzwerk (Recurrent Neural Network) ausgeführt ist, ausgebildet sein.

**Bezugszeichenliste**

| | | | |
|---|---|---|---|
| 1 | Feldhäcksler | 34 | Sichtfeld |
| 2 | Maispflanze | 35 | Oberseite von 15 |
| 3 | Aufnahmevorrichtung | 36 | Montagevorrichtung |
| 4 | Vorsatzgerät | 37 | Steuereinheit |
| 5 | Einzugseinrichtung | 38 | Halterung |
| 6 | Walzenpaar | 39 | Haltevorrichtung |
| 7 | Walzenpaar | 40 | Halteelement |
| 8 | Häckselvorrichtung | 41 | Halteelement |
| 9 | Häckseltrommel | 42 | Langloch |
| 10 | Gegenschneide | 43 | Langloch |
| 11 | Konditionier- oder Crackerwalze | | |
| 12 | Spalt | D | Gesamtdurchmesser von 29 |
| 13 | Nachzerkleinerungsvorrichtung | D₂₉ | Durchmesser |
| 14 | Nachbeschleuniger | | |
| 15 | Auswurfkrümmer | | |
| 16 | Erfassungseinrichtung | | |
| 17 | Fahrerassistenzsystem | | |
| 18 | Eingabe-Ausgabe-Einheit | | |
| 19 | Fahrerkabine | | |
| 20 | Arbeitsaggregat | | |
| 21 | Erntegutstrom | | |
| 22 | NIR-Sensor | | |
| 23 | Ganze Körner | | |
| 24 | Zerkleinerte Körner | | |
| 25 | Kornbestandteil | | |
| 26 | Nicht-Kornbestandteil | | |
| 27 | Bildanalyseeinrichtung | | |
| 28 | Gehäuse | | |
| 29 | Sichtscheibe | | |
| 30 | Spiegel | | |
| 31 | Objektiv | | |
| 32 | RGB-Kamera | | |
| 33 | Lichtquelle | | |

## Patentansprüche

1. Kamerasystem (16) für einen selbstfahrenden Feldhäcksler (1), welches dazu ausgeführt und eingerichtet ist, einen von Arbeitsaggregaten (20) des Feldhäckslers (1) bearbeiteten Erntegutstrom (21), der ganze Körner (23) und zerkleinerte Körner (24) als Kornbestandteile (25) sowie Nicht-Kornbestandteile (26) umfasst, zu erfassen und auszuwerten, umfassend eine RGB-Kamera (32), die zur Erfassung des einen Auswurfkrümmer (15) des Feldhäckslers (1) durchströmenden Erntegutstroms (21) eingerichtet ist, wobei die RGB-Kamera (32) in einem an dem Auswurfkrümmer (15) angeordneten Gehäuse (28) angeordnet ist, in welchem eine lichtdurchlässige Sichtscheibe (29) angeordnet ist, an welcher der zu detektierende Erntegutstrom (21) vorbeiströmt, sowie zumindest eine der Sichtscheibe (29) gegenüberliegend angeordnete Lichtquelle (33), deren Lichtstrahlen auf den Erntegutstrom (21) gerichtet sind, zumindest ein Spiegel (30), welcher von dem Erntegutstrom (21) reflektiertes Licht in ein an der RGB-Kamera (32) angeordnetes Objektiv (31) umlenkt, und eine Bildanalyseeinrichtung (27), an welche die RGB-Kamera (32) vom Erntegutstrom (21) aufgenommene Bilder zur Auswertung überträgt, **dadurch gekennzeichnet, dass** die RGB-Kamera (32) die Bilder mit einer Bildrate im Bereich von 20 Bildern/Sekunde bis 40 Bildern/Sekunde aufnimmt, dass die Belichtungszeit zwischen 5 Mikrosekunden und 25 Mikrosekunden liegt und dass das Objektiv (31) der RGB-Kamera (32) eine Brennweite zwischen 7 mm und 10 mm aufweist.

2. Kamerasystem (16) nach Anspruch 1, **dadurch gekennzeichnet, dass** das Objektiv (31) einen Bildwinkel im Bereich von 32° bis 37° aufweist.

3. Kamerasystem (16) nach Anspruch 1 oder 2, **dadurch gekennzeichnet, dass** die rund, oval oder polygonal ausgeführte Sichtscheibe (29) einen durch das Objektiv (31) erfassbaren sichtbaren Durchmesser (D₂₉) aufweist, der größer als 7 cm und kleiner als 13 cm ist.

4. Kamerasystem (16) nach einem der Ansprüche 1 bis 3, **dadurch gekennzeichnet, dass** sich durch den zumindest einen Spiegel (30) eine Gegenstandsweite im Bereich von 175 mm bis 195 mm ergibt.

5. Kamerasystem (16) nach einem der Ansprüche 1 bis 4, **dadurch gekennzeichnet, dass** die Sichtscheibe (29) aus Saphirglas besteht.

6. Kamerasystem (16) nach einem der Ansprüche 1 bis 5, **dadurch gekennzeichnet, dass** das Gehäuse (28) auf der Oberseite (35) des Auswurfkrümmers (15) angeordnet ist, wobei das Gehäuse (28) bezogen auf die Längserstreckung des Auswurfkrümmers (15) in dessen zweiten Hälfte angeordnet ist.

7. Kamerasystem (16) nach einem der Ansprüche 1 bis 6, **dadurch gekennzeichnet, dass** das Kamerasystem (16) eine Steuereinheit (37) zur Ansteuerung der zumindest einen Lichtquelle (33) aufweist.

8. Kamerasystem (16) nach Anspruch 7, **dadurch gekennzeichnet, dass** die Steuereinheit (37) zur Ansteuerung der zumindest einen Lichtquelle (33) im Gehäuse (28) angeordnet ist.

9. Kamerasystem (16) nach einem der Ansprüche 1 bis 8, **dadurch gekennzeichnet, dass** die zumindest eine Lichtquelle (33) im Gehäuse (28) angeordnet ist.

10. Kamerasystem (16) nach einem der Ansprüche 1 bis 9, **dadurch gekennzeichnet, dass** die Position der zumindest einen Lichtquelle (33) im Gehäuse (28) gegenüber der Sichtscheibe (29) und dem Spiegel (30) in vertikaler Richtung und/oder in horizontaler Richtung verstellbar ist.

11. Kamerasystem (16) nach einem der Ansprüche 1 bis 10, **dadurch gekennzeichnet, dass** die Position der RGB-Kamera (32) in vertikaler Richtung und/oder in horizontaler Richtung verstellbar ist.

12. Kamerasystem (16) nach einem der Ansprüche 1 bis 11, **dadurch gekennzeichnet, dass** die in den Auswurfkrümmer (15) hineinragende Sichtscheibe (29) auf der Innenseite des Auswurfkrümmers (15) mit dessen Oberfläche im Wesentlichen bündig abschließend angeordnet ist.

13. Kamerasystem (16) nach einem der Ansprüche 1 bis 12, **dadurch gekennzeichnet, dass** die Stärke der Sichtscheibe (29) im Bereich zwischen 2 mm und 4 mm liegt.

14. Kamerasystem (16) nach einem der Ansprüche 1 bis 13, **dadurch gekennzeichnet, dass** der Abstand der Lichtquelle (33) zum Mittelpunkt der Sichtscheibe (29) zwischen 120 mm und 130 mm beträgt und dass die Lichtquelle (33) unter einem Winkel zwischen 31° und 34° zur Oberfläche der Sichtscheibe (29) geneigt angeordnet ist.

15. Feldhäcksler (1), umfassend ein Vorsatzgerät (4) als Arbeitsaggregat (20) zur Aufnahme von Erntegut, Arbeitsaggregate (20) zur Bearbeitung eines aus dem aufgenommen Erntegut erzeugten Erntegutstromes (21), ein Fahrerassistenzsystem (17), welches zur Ansteuerung der Arbeitsaggregate (20) ausgeführt und eingerichtet ist, eine Bildanalyseeinrichtung (27) wobei die Bildanalyseeinrichtung (17) ein Kamerasystem (16) umfasst, welches zyklisch Bilder des Erntegutstroms (21) aufnimmt und an die Bildanalyseeinrichtung (27) zur Bildanalyse unter Verwendung eines Bildanalyseverfahrens überträgt, um den Kornaufschlussgrad von Körnern (23) im Erntegutstrom (21) zu bestimmen, **dadurch gekennzeichnet, dass** das Kamerasystem (16) nach einem der Ansprüche 1 bis 14 ausgeführt ist.

## Claims

1. Camera system (16) for a self-propelled forage harvester (1), the camera system being designed and configured to capture and evaluate a harvested crop flow (21) which is processed by working units (20) of the forage harvester (1) and which comprises whole grains (23) and comminuted grains (24) as grain constituents (25) and non-grain constituents (26), comprising an RGB camera (32), which is configured for capturing the harvested crop flow (21) flowing through a discharge chute (15) of the forage harvester (1), wherein the RGB camera (32) is arranged in a housing (28), which is arranged on the discharge chute (15) and in which a light-transmissive observation window (29) is arranged, the harvested crop flow (21) to be detected flowing past said observation window, and also at least one light source (33) which is arranged opposite the observation window (29) and whose light beams are directed onto the harvested crop flow (21), at least one mirror (30), which deflects light reflected by the harvested crop flow (21) into a lens (31) arranged on the RGB camera (32), and an image analysis device (27), to which the RGB camera (32) transmits recorded images of the harvested crop flow (21) for evaluation, **characterized in that** the RGB camera (32) records the images with a frame rate in the range of 20 frames/second to 40 frames/second, **in that** the exposure time is between 5 microseconds and 25 microseconds and **in that** the lens (31) of the RGB camera (32) has a focal length of between 7 mm and 10 mm.

2. Camera system (16) according to Claim 1, **characterized in that** the lens (31) has an angle of view in the range of 32° to 37°.

3. Camera system (16) according to Claim 1 or 2, **characterized in that** the observation window (29), which is of round, oval or polygonal design, has a visible diameter (D₂₉) - capturable by the lens (31) - which is larger than 7 cm and smaller than 13 cm.

4. Camera system (16) according to any of Claims 1 to 3, **characterized in that** an object distance in the range of 175 mm to 195 mm results by virtue of the at least one mirror (30).

5. Camera system (16) according to any of Claims 1 to 4, **characterized in that** the observation window (29) consists of sapphire glass.

6. Camera system (16) according to any of Claims 1 to 5, **characterized in that** the housing (28) is arranged on the top side (35) of the discharge chute (15), wherein the housing (28) is arranged in the second half of the discharge chute (15) relative to the longitudinal extent thereof.

7. Camera system (16) according to any of Claims 1 to 6, **characterized in that** the camera system (16) has a control unit (37) for controlling the at least one light source (33).

8. Camera system (16) according to Claim 7, **characterized in that** the control unit (37) for controlling the at least one light source (33) is arranged in the housing (28).

9. Camera system (16) according to any of Claims 1 to 8, **characterized in that** the at least one light source (33) is arranged in the housing (28).

10. Camera system (16) according to any of Claims 1 to 9, **characterized in that** the position of the at least one light source (33) in the housing (28) is adjustable in the vertical direction and/or in the horizontal direction relative to the observation window (29) and the mirror (30).

11. Camera system (16) according to any of Claims 1 to 10, **characterized in that** the position of the RGB camera (32) is adjustable in the vertical direction and/or in the horizontal direction.

12. Camera system (16) according to any of Claims 1 to 11, **characterized in that** the observation window (29) projecting into the discharge chute (15) is arranged on the inside of the discharge chute (15) in a manner terminating substantially flush with the surface thereof.

13. Camera system (16) according to any of Claims 1 to 12, **characterized in that** the thickness of the observation window (29) is in the range of between 2 mm and 4 mm.

14. Camera system (16) according to any of Claims 1 to 13, **characterized in that** the distance between the light source (33) and the midpoint of the observation window (29) is between 120 mm and 130 mm and **in that** the light source (33) is arranged in a manner inclined at an angle of between 31° and 34° with respect to the surface of the observation window (29).

15. Forage harvester (1), comprising an attachment (4) as a working unit (20) for picking up harvested crop, working units (20) for processing a harvested crop flow (21) generated from the harvested crop picked up, a driver assistance system (17) designed and configured for controlling the working units (20), an image analysis device (27), wherein the image analysis device (17) comprises a camera system (16), which cyclically records images of the harvested crop flow (21) and transmits them to the image analysis device (27) for image analysis using an image analysis method in order to determine the degree of grain fragmentation of grains (23) in the harvested crop flow (21), **characterized in that** the camera system (16) is designed according to any of Claims 1 to 14.

## Revendications

1. Système de caméra (16) destiné à une ramasseuse-hacheuse (1) automotrice, qui est réalisé et agencé pour détecter et analyser un flux de récolte (21) qui est traité par des organes de travail (20) de la ramasseuse-hacheuse (1) et comporte des grains entiers (23) et des grains broyés (24), en tant que constituants grains (25), ainsi que des constituants non-grains (26), comprenant une caméra RVB (32) qui est conçue pour détecter le flux de récolte (21) traversant une goulotte d'éjection (15) de la ramasseuse-hacheuse (1), la caméra RVB (32) étant disposée dans un boîtier (28) placé sur la goulotte d'éjection (15), dans lequel est installée une vitre (29) laissant passer la lumière, devant laquelle passe le flux de récolte (21) à détecter, ainsi qu'au moins une source lumineuse (33) qui est installée en vis-à-vis de la vitre (29) et dont les faisceaux lumineux sont dirigés sur le flux de récolte (21), au moins un miroir (30) qui dévie la lumière réfléchie par le flux de récolte (21), dans un objectif (31) disposé sur la caméra RVB (32), et un dispositif d'analyse d'image (27) auquel la caméra RVB (32) transmet des images prises du flux de récolte (21), en vue de leur analyse, **caractérisé en ce que** la caméra RVB (32) recueille les images avec un débit d'images compris dans la plage allant de 20 images/seconde à 40 images/seconde, **en ce que** le temps d'exposition est compris entre 5 microsecondes et 25 microsecondes, et **en ce que** l'objectif (31) de la caméra RVB (32) présente une distance focale comprise entre 7 mm et 10 mm.

2. Système de caméra (16) selon la revendication 1, **caractérisé en ce que** l'objectif (31) présente un angle de champ compris dans la plage allant de 32° à 37°.

3. Système de caméra (16) selon la revendication 1 ou 2, **caractérisé en ce que** la vitre (29) réalisée sous une forme ronde, ovale ou polygonale présente un diamètre (D₂₉) visible pouvant être capté par l'objectif (31), qui est supérieur à 7 cm et inférieur à 13 cm.

4. Système de caméra (16) selon une des revendications 1 à 3, **caractérisé en ce que** le miroir (30), au nombre d'au moins un, donne une largeur d'objet comprise dans la plage allant de 175 mm à 195 mm.

5. Système de caméra (16) selon une des revendications 1 à 4, **caractérisé en ce que** la vitre (29) est constituée de verre saphir.

6. Système de caméra (16) selon une des revendications 1 à 5, **caractérisé en ce que** le boîtier (28) est disposé sur la face supérieure (35) de la goulotte d'éjection (15), le boîtier (28) étant placé dans la deuxième moitié de la goulotte d'éjection (15), rapporté à la dimension longitudinale de celle-ci.

7. Système de caméra (16) selon une des revendications 1 à 6, **caractérisé en ce que** le système de caméra (16) présente une unité de commande (37) destinée à activer la source lumineuse (33), au nombre d'au moins une.

8. Système de caméra (16) selon la revendication 7, **caractérisé en ce que** l'unité de commande (37), destinée à activer la source lumineuse (33), au nombre d'au moins une, est disposée dans le boîtier (28).

9. Système de caméra (16) selon une des revendications 1 à 8, **caractérisé en ce que** la source lumineuse (33), au nombre d'au moins une, est disposée dans le boîtier (28).

10. Système de caméra (16) selon une des revendications 1 à 9, **caractérisé en ce que** la position de la source lumineuse (33), au nombre d'au moins une, dans le boîtier (28), par rapport à la vitre (29) et au miroir (30), peut être réglée dans le sens vertical et/ou dans le sens horizontal.

11. Système de caméra (16) selon une des revendications 1 à 10, **caractérisé en ce que** la position de la caméra RVB (32) peut être réglée dans le sens vertical et/ou dans le sens horizontal.

12. Système de caméra (16) selon une des revendications 1 à 11, **caractérisé en ce que** la vitre (29) qui avance dans la goulotte d'éjection (15) est disposée sur la face interne de la goulotte d'éjection (15), en affleurant sensiblement la surface de celle-ci.

13. Système de caméra (16) selon une des revendications 1 à 12, **caractérisé en ce que** l'épaisseur de la vitre (29) se situe dans la plage comprise entre 2 mm et 4 mm.

14. Système de caméra (16) selon une des revendications 1 à 13, **caractérisé en ce que** la distance de la source lumineuse (33) par rapport au centre de la vitre (29) est comprise entre 120 mm et 130 mm, et **en ce que** la source lumineuse (33) est installée en étant inclinée sous un angle compris entre 31° et 34° par rapport à la surface de la vitre (29).

15. Ramasseuse-hacheuse (1), comprenant un outil frontal (3) en tant qu'organe de travail (20) destiné au ramassage de récolte, des organes de travail (20) destinés à traiter un flux de récolte (21) produit à partir de la récolte ramassée, un système d'aide à la conduite (17) qui est réalisé et conçu en vue de l'activation des organes de travail (20), un dispositif d'analyse d'image (27), le dispositif d'analyse d'image (17) comportant un système de caméra (16) qui recueille de manière cyclique des images du flux de récolte (21) et les transmet au dispositif d'analyse d'image (27), en vue de l'analyse d'image en utilisant un procédé d'analyse d'image afin de déterminer le taux d'éclatement des grains (23) dans le flux de récolte (21), **caractérisée en ce que** le système de caméra (16) est réalisé selon une des revendications 1 à 14.
